# EUROPÄISCHE PATENTANMELDUNG

(11) **EP 1 455 404 A2**
(43) Veröffentlichungstag der Anmeldung: **08.09.2004**
(21) Anmeldenummer: 03026862.7
(22) Anmeldetag: 12.06.2002
(51) Int. Cl.: H01M 8/02

(54) **Brennstoffzelle und Verfahren zur Herstellung einer solchen Brennstoffzelle**

(30) Priorität: 13.06.2001 DE 10128786
(62) Teilanmeldung aus: 02751015.5
(71) Anmelder: Bayerische Motoren Werke Aktiengesellschaft, 80809 München (DE); Deutsches Zentrum für Luft- und Raumfahrt e.V., 51147 Köln (DE); Rhodius GmbH, 91781 Weissenburg (DE)
(72) Erfinder: Wetzel, Franz-Josef, 82216 Gernlinden (DE); Bittner, Erich, 91792 Stopfenheim (DE); Henne, Rudolf, 71034 Böblingen (DE)

(57) **Zusammenfassung**

Die Erfindung betrifft eine Brennstoffzelle, umfassend einen Stack aus zumindest einer Einzel-Zelle mit einer Anoden-Elektrolyt-Kathodeneinheit, zumindest einer Bipolarplatte und einer aus Metalldraht aufgebauten porösen Tragstruktur, insbesondere in Form eines Gestricks oder Gewirks oder Geflechts oder Gewebes für die Anoden-Elektrolyt-Kathodeneinheit, wobei die Tragstruktur einen sich verändernden Strömungswiderstand besitzt, der durch eine Veränderung der Drahtstärke des die Tragstruktur bildenden Drahtes und/oder durch eine bei der Herstellung der Tragstruktur unterschiedlich gewählte Maschendichte und/oder Materialdichte und/oder durch eine Änderung der Maschenform und/oder der Oberflächenbeschaffenheit der Schlingen in der Tragstruktur erreicht ist. Der sich verändernde Strömungswiderstand kann aber auch durch divergierende Kanäle in der Tragstruktur erreicht sein.

## Beschreibung

Die Erfindung betrifft eine Brennstoffzelle, umfassend einen Stack aus zumindest einer Einzel-Zelle mit einer Anoden-Elektrolyt-Kathodeneinheit (CEA), zumindest einer Bipolarplatte und einer aus Metalldraht aufgebauten porösen Tragstruktur, insbesondere in Form eines Gestricks oder Gewirks oder Geflechts oder Gewebes, für die Anoden-Elektrolyt-Kathodeneinheit (CEA), wobei die von einem Fluid durchströmte Tragstruktur unterschiedlich strukturiert ist. Zum technischen Umfeld wird beispielshalber auf die US 6,060,190 verwiesen.

Brennstoffzellen sind bekanntermaßen elektrochemische Energiewandler, die chemische Energie direkt in elektrischen Strom umwandeln. Dazu wird den sog. Einzel-(Brennstoff)-Zellen kontinuierlich Brennstoff auf einer Anodenseite und Sauerstoff bzw. Luft auf einer Kathodenseite zugeführt. Das Grundprinzip ist durch die räumliche Trennung der Reaktionspartner durch einen Elektrolyten gekennzeichnet, welcher zwar für Ionen oder Protonen leitfähig ist, nicht aber für Elektronen. Oxidations- und Reduktionsreaktion laufen dadurch an örtlich unterschiedlichen Stellen ab, nämlich an der Anode einerseits und an der Kathode andererseits, wobei der so verursachte Elektronenaustausch zwischen dem Oxidationsmittel und dem Reduktionsmittel über einen äußeren Stromkreis erfolgt. Insofern ist die Brennstoffzelle Teil eines Stromkreises.

Eine Brennstoffzelle besteht in Abhängigkeit von der erwünschten Leistung und Spannung aus mehreren parallel und/oder seriell verschalteten Einzelzellen, die jeweils aus einer Elektrolyt-Elektroden-Einheit (auch als CEA = cathode-electrolytanode bezeichnet) bestehen. Mittels elektrisch leitfähiger End- oder Zwischenplatten (sog. Bipolar-Platten) werden die Einzelzellen miteinander verbunden und zu einem Stapel (sog. Stack) zusammengefasst. Bei den bisherigen Konzepten werden die gasförmigen Reaktanden über in die Bipolar-Platten eingefräste Rillen auf den Elektrodenoberflächen der Reaktionsschichten verteilt. Die Herstellung dieser Fräsrillen ist sehr kostspielig. Gleichzeitig weisen solchermaßen hergestellte Brennstoffzellen infolge der großflächigen Abdeckung der Reaktionsschichten und der damit verbundenen Behinderungen des Stoffaustausches eine relativ geringe gewichtsspezifische sowie volumenspezifische Leistungsdichte auf.

Weiterhin ist eine Brennstoffzellen-Bauweise bekannt, bei der die Kathoden-Elektrolyt-Anoden-Schichten, die die genannte CEA bilden, auf ein poröses Festkörper-Substrat aufgebracht sind, das als Trägerschicht dient. Bei einem solchen Aufbau einer Einzel-Brennstoff-Zelle treten im Betrieb thermomechanische Spannungen auf, die durch unterschiedliche Wärmeausdehnungen der Kathoden-, Elektrolyt- und Anodenschichten einerseits und dem porösem Festkörper-Substrat andererseits herrühren. Überdies treten durch verschiedene Reaktionsgeschwindigkeiten über eine einzelne Trägerschicht-Platte hinweg unterschiedliche Reaktionstemperaturen auf, die ebenfalls zu thermomechanischen Spannungen führten. Als Folge von diesen thermomechanischen Spannungen kann es zu beträchtlichen Funktionsbeeinträchtigungen in Folge von Beschädigungen der Einzelzelle kommen. Insbesondere beim Einsatz einer derartigen Brennstoffzelle im kraftfahrzeugtechnischen Bereich, bei dem zusätzlich Belastungen durch Erschütterungen während einer Fahrt auftreten, wird diese Problematik noch verschlimmert.

Aus der US 6,060,190 ist eine Brennstoffzelle mit einem porösen Elektrodensubstrat bekannt, das ein gewobenes oder nicht gewobenes, elektrisch schlecht leitfähiges oder elektrisch isolierendes Gewebe beinhaltet, das ein elektrisch leitfähiges Füllmittel enthält. Dabei kann das sog. Mehrschicht-Substrat Schichten, die Gewebe aus unterschiedlichen Materialien oder mit unterschiedlichen Strukturen beinhalten, und/oder Schichten enthalten, die Füllmittel aus Zusammensetzungen enthalten. Mit dieser sog. unterschiedlichen Strukturierung können also die Zusammensetzung und die Eigenschaften des Substrats in der Richtung senkrecht zur Ebene variiert werden.

Hiermit soll nun für eine Brennstoffzelle nach dem Oberbegriff des Anspruchs 1 eine Möglichkeit für eine weitere funktionale Verbesserung aufgezeigt werden (= Aufgabe der vorliegenden Erfindung). Zur Lösung dieser Aufgabe sind die Merkmale der unabhängigen Ansprüche 1 oder 2 vorgesehen, die den gemeinsamen Kerngedanken beinhalten, der in Form eines Gestricks oder Gewirks oder Geflechts oder Gewebes aus Metalldraht aufgebauten sog. Tragstruktur einen sich örtlich verändernden Strömungswiderstand zu verleihen.

Die Verwendung einer aus Metall-Draht oder Metall-Drähten aufgebauten Tragstruktur für eine Brennstoff-Einzel-Zelle, auf der die Anoden-Elektrolyt-Kathoden-Einheit aufgebracht ist, bringt grundsätzlich in den verschiedensten Bereichen erhebliche Vorteile mit sich. Ein Vorteil ist eine gewisse freie Beweglichkeit in allen drei Dimensionen, weshalb eine solche Tragstruktur dann eine dreidimensionale Elastizität und Beweglichkeit besitzt. So können unterschiedliche Wärmedehnungen der Kathoden-Elektrolyt-Anoden-Beschichtung (= CEA) zu den umliegenden metallischen Strukturen durch Verformung oder Verschiebung der einzelnen Drähte innerhalb der Tragstruktur, bspw. der Schlingen eines Gestricks, ausgeglichen werden. Insbesondere die für keramische Strukturen (die Anoden-Elektrolyt-Kathoden-Einheit bildet eine solche) kritischen Zugspannungen werden auf einem zulässigen Niveau gehalten.

Besonders vorteilhaft ist jedoch die Möglichkeit, einen sich örtlichen verändernden Strömungswiderstand für das durch die Tragstruktur hindurchgeführte Fluid darzustellen. Eine aus Metall-Draht oder Metall-Drähten aufgebaute poröse Tragstruktur, die funktional von dem oder den Reaktionsfluid(en) der Brennstoffzelle durchströmt wird, bietet somit die Möglichkeit einer gezielten Verteilung der (gasförmigen) Reaktanden über der aktiven Oberfläche der CEA. Da ein Gestrick oder dgl., d.h. ein Gewebe, ein Gewirk oder ein Geflecht strömungsdurchlässig ist, und die sog. Reaktanden-Fluide durch das Gestrick oder dgl., d.h. durch die poröse Tragstruktur hindurchströmen, können durch einen geeigneten Aufbau und insbesondere durch eine örtlich unterschiedliche Ausbildung der Tragstruktur sog. Gradierungen in den verschiedenen Ausdehnungsrichtungen bzw. Strömungsrichtungen erreicht werden, womit gemeint ist, dass dem hindurchströmenden Fluid in unterschiedlichen Bereichen und/oder unterschiedlichen Richtungen ein unterschiedlicher Strömungswiderstand entgegengesetzt werden kann. Hierzu können bspw. die (freien) Strömungsquerschnitte in der Tragstruktur in weiten Bereichen gezielt unterschiedlich sein sein. Damit stellen sich dann in unterschiedlichen Bereichen der Tragstruktur unterschiedliche Strömungsgeschwindigkeiten ein.

Als Folge hiervon ist über der aktiven Oberfläche der CEA-Einheit betrachet das Reaktionsverhalten gezielt einstellbar. Bspw. kann dafür gesorgt werden, dass im Zufuhr-Bereich der Brennstoff-Einzel-Zelle, in welchem eine große Menge von frischem Reaktionsfluid zur Verfügung steht, die Reaktionsfreudigkeit gedämpft wird, indem diesem Reaktionsfluid eine relativ hohe Strömungsgeschwindigkeit in einer zur aktiven Oberfläche der CEA-Einheit parallelen Richtung aufgeprägt wird und/oder indem dem Reaktionsfluid ein relativ hoher Strömungswiderstand in einer zur CEA-Einheit hin verlaufenden Strömungsrichtung entgegengesetzt wird. Umgekehrt kann bspw. im Abfuhr-Bereich der Brennstoff-Einzel-Zelle, in welchem nur mehr eine geringe Menge von frischem Reaktionsfluid zur Verfügung steht, die Reaktionsfreudigkeit erhöht werden, indem diesem Reaktionsfluid eine relativ niedrige Strömungsgeschwindigkeit in einer zur aktiven Oberfläche der CEA-Einheit parallelen Richtung aufgeprägt wird und/oder indem dem Reaktionsfluid ein relativ geringer Strömungswiderstand in einer zur CEA-Einheit hin verlaufenden Strömungsrichtung entgegengesetzt wird. Mit einer solchen gezielten Einstellung des Reaktionsverhaltens über der Oberfläche der CEA-Einheit kann nun gezielt der Aufbau von thermischen Spannungen verringert bzw. in gewissen, ausreichendem Maße vermieden werden, wodurch die o.g. beim bekannten Stand der Technik vorliegenden Probleme gelöst werden können.

Zur Erzielung dieser genannten unterschiedlichen Strömungsverhältnisse bzw. Strömungsgeschwindigkeiten in der jeweils gewünschten Weise kann die Tragstruktur bzw. das Gestrick oder dgl. bspw. in seiner Dickenrichtung "gradiert" sein, wobei dann der freie bzw. wirksame Strömungsquerschnitt innerhalb der Tragstruktur bzw. des Gestrickes zu der Kathoden-Elektrolyt-Anoden-Einheit hin abnimmt. Dies kann bspw. durch eine Veränderung der Maschenweite im Gestrick, und/oder der Stärke des die Tragstuktur bildenden Drahtes, der Bauteildichte, der Maschenform, der Schlingenwölbung im Gestrick oder dgl. und/oder der Oberflächenbeschaffenheit der verwendeten Drähte erreicht werden. So kann je nach gewünschten Strömungseffekten im Falle eines Gestricks das Strickverfahren entsprechend angepasst werden, so dass die Drähte geeignet bzw. im Hinblick auf die gewünschte sog. "Gradierung" gezielt miteinander verstrickt werden.

In diesem Zusammenhang sei darauf hingewiesen, dass im weiteren der Einfachheit halber teils nur von einem Gestrick oder allgemein von einer Tragstruktur gesprochen wird, ohne hierdurch die anderen genannten Varianten, wie ein Gewebe oder Gewirk oder Geflecht aus metallischen Drähten ausnehmen zu wollen. Stets stehen die Begriffe "Tragstruktur" oder "Gestrick" für eine erfindungsgemäße poröse Tragstruktur für die CEA-Einheit einer Einzel-Brennstoff-Zelle, die aus einem oder mehreren metallischen Drähten in Form eines Gestricks oder Gewirks oder Geflechts oder Gewebes aufgebaut ist.

Zurückkommend auf die sog. Gradierung in der Tagstruktur, d.h. auf die örtlich unterschiedlichen Strömungswiderstände für das Reaktionsfluid ist es auch möglich, eine sog. Gradierung der Tragstruktur in einer Richtung parallel zu der Kontakt-Ebene der Kathoden-Elektrolyt-Anoden-Einheit zu erreichen, bzw. den Strömungswiderstand in dieser Richtung gezielt zu variieren. Bspw. durch eine solche Veränderung des freien bzw. wirksamen Strömungsquerschnittes in der Strömungsrichtung der Reaktanden und Reaktionsprodukte kann eine Homogenisierung der Stoffumsätze und der Energiefreisetzung erreicht werden, da beispielsweise mit einer Strömungsaufweitung in Strömungsrichtung die wegen der Geschwindigkeitsabnahme für verlängerte Reaktionszeiten sorgenden Effekte wegen verarmter Medien ausgeglichen werden können. Wiederum kann die Gradierung, also die Strömungsquerschnittsveränderung, in Richtung der späteren Strömungsrichtung eines Reaktanden durch entsprechende Ausbildung des (bspw.) Gestricks erreicht werden, also durch unterschiedliche Maschenweite, Drahtstärke, Bauteildichte, Maschenform, Schlingenwölbung und/oder Oberflächenbeschaffenheit der Drähte.

Dabei können im Gestrick bzw. in der Tragstruktur auch geeignete Kanäle ausgebildet sein, deren freier Kanalquerschnitt sich über der Kanallänge ändert, womit es sich um sog. divergierende (alternativ konvergierende) Kanäle handelt. Wenn diese Kanäle auf der Oberfläche der Tragstruktur vorgesehen werden, so ist es möglich, die genannten unterschiedlichen Strömungsbedingungen durch Einprägen oder Einpressen (Profilieren) von entsprechenden Kanälen auf oder in die Tragstruktur zu bewirken. Dieses Einprägen oder Einpressen von Kanälen auf der Tragstruktur-Oberfläche kann beispielsweise mittels Stempeln oder Rollen erfolgen.

Die Drähte der Tragstruktur können bei einer bevorzugten Ausführungsform aus Nickel, ferritischen oder austenitischen Legierungen sowie aus einem Material bestehen, das diese Elemente oder Legierungen enthält. Beispielsweise kann NiFe22, Inconel, FeCrAloy oder Edelstahl verwendet werden. Das Material Nickel verbessert nämlich die Reaktionskinetik der (in der fertigen Brennstoff-Einzel-Zelle) an der Tragstruktur anliegenden Anode der genannten CEA. Dabei können die Drähte mit einem korrosionsbeständigem Material überzogen sein, um auch bei Hochtemperatur-Brennstoffzellen eine Korrosion durch die gasförmigen Reaktanden zu verhindern. Überdies ist es möglich, Drähte aus unterschiedlichem Material zu kombinieren, bspw. können unterschiedliche Drähte zur bzw. in der Tragstruktur zusammengefügt werden, und bspw. hinsichtlich ihrer Wirkung auf die stattfindenden Reaktionen örtlich geeignet angeordnet werden.

Zur Verbesserung der Stabilität bzw. der Maßhaltigkeit der Tragstruktur und zur Erreichung eines möglichst niedrigen elektrischen Widerstands innerhalb der Tragstruktur können die einzelnen aneinanderliegenden, die Tragstruktur bildenden Drähte an ihren Berührpunkten vorzugsweise fest miteinander verbunden werden. Diese Verbindung kann durch Verkleben, Verlöten, Versintern oder Verschweißen erfolgen. Ein Versintern in einem geeigneten Ofen unter höheren Temperaturen kann dabei bevorzugt unter geeignetem Anpressdruck durchgeführt werden.

Eine soeben genannte Verschweißung zwischen den einzelnen Drähten der Tragstruktur an deren jeweiligen Kontaktstellen kann beispielsweise über ein Widerstandsschweißen erreicht werden, indem ein Stromimpuls mit Hilfe zweier metallischer Elektroden an der Ober- und Unterseite der Tragstruktur diese durchströmt. Vorzugsweise erfolgt diese Verschweißung in einer Schutzgasatmosphäre oder in Vakuum. Als Schweißelektroden können Linearelektroden, Platten oder Rollen verwendet werden. Zur Vermeidung des Anschweißens der Tragstruktur an die Elektroden sollten die Elektrodenoberflächen entsprechend beschaffen sein, beispielsweise entsprechende Überzüge aufweisen, die ein Verschweißen verhindern oder einen möglichst niedrigen Übergangswiderstand zur Tragstruktur haben, so dass an der Berührungsfläche kaum ohmsche Wärme frei wird.

Ein besonders bevorzugtes Verfahren zum Aufbringen der Kathoden-Elektrolyt-Anoden-Schicht(en) auf die Tragstruktur ist ein thermisches Beschichtungsverfahren. So kann z.B. ein Flammspritzverfahren (einfaches Flammspritzen; High Velocity Oxygen Flame Spraying) oder ein Plasmaspritzverfahren (atmosphärisches Plasmaspritzen, Vakuumplasmaspritzen, Low Pressure Plasma Spraying) verwendet werden. Die Plasmen können beispielsweise mittels einer Gleichspannung oder durch induktive Hochfrequenzanregung erzeugt werden, wobei es möglich ist, zur Schichterzeugung Pulver, Suspensionen, flüssige und/oder gasförmige Ausgangsstoffe heranzuziehen. Bei der Verwendung eines Vakuum-Plasma-Spritz-Verfahrens oder eines Low Pressure Plasma Spraying Verfahrens können die Plasmaquellen mit Hochgeschwindigkeitsdüsen versehen sein, wobei dann bei einem Reaktordruck im Bereich unter 1 bar, beispielsweise zwischen 50 und 300 mbar die Erzeugung sehr dichter Schichten möglich ist.

Ausgehend vom geeignet vorgefertigten Gestrick oder dgl. kann zur Herstellung einer erfindungsgemäßen Brennstoff-Einzel-Zelle mit dem Aufbau der Beschichtung für die Anoden-Elektrolyt-Kathodeneinheit mit der Anode auf einer Gestrickseite bzw. Tragstruktur-Seite begonnen werden, wobei das Gestrick bzw. die Tragstruktur in diesem Bereich geringfügig vorverdichtet oder anderweitig vorbehandelt sein kann. Als Anodengrundmaterial kann beispielsweise Nickel oder eine NiAl-Legierung im Gemisch mit ZrO₂ dienen. Im Fall der NiAl-Legierung kann das Aluminium dann beispielsweise mit einer Kalilauge herausgelöst werden, so dass eine fest gebundene, hochleitende, hochporöse Nickel-ZrO₂-Verbundschicht entsteht. In diesem Zusammenhang sei darauf hingewiesen, dass als erste Schicht auf die Tragstruktur eine sog. Anodengrundschicht oder sog. Deckschicht aufgebracht werden kann, auf der dann die tatsächlich aktive Anode aufgetragen wird, wobei für die Anodengrundschicht bzw. Deckschicht abermals Nickel, eine Nickel-Legierung oder eine Nickel-Aluminium-Legierung verwendet werden kann.

Insbesondere um den thermischen Belastungen während des thermischen Beschichtungsvorganges mit dem Elektrodenmaterial gerecht zu werden, können Maßnahmen zur Erhöhung der Festigkeit der Tragstruktur vorgesehen sein. Damit kann eine Ausbeulung und ein Verzug der Tragstruktur, welche z.B. unter einer Zugbelastung steht, vermieden werden. Solche festigkeitserhöhende Elemente können beispielsweise metallische Drahtgerippe oder Drahtgitter sein. Es können aber auch geeignete Längsdrähte eingebaut sein. Dabei kann der Drahtabstand beispielsweise im Bereich von 0,5 bis 20 mm gewählt werden. Überdies ist es auch möglich, eingewobene Randleisten oder Randstreifen, beispielsweise aus Metallfolie, ebenfalls zur Erhöhung der Festigkeitssteigerung der Tragstruktur zu verwenden. Die Randleisten oder Randstreifen könnten nach dem Beschichtungsvorgang dann abgetrennt, jedoch auch an der Tragstruktur belassen und zur Randabdichtung der Brennstoff-Einzel-Zelle verwendet werden.

In diesem Zusammenhang sei erwähnt, dass der Rand bspw. des Gestrickes zur Ausbildung einer Einzel-Brennstoff-Zelle, von denen dann mehrere zu einem sog. Stack zusammengebaut werden, zur Ausbildung einer sog. Randleiste auch geeignet verpresst werden kann. Bspw. mit dieser Randleiste kann das Gestrick dann - nachdem die Anoden-Elektrolyt-Kathoden-Einheit auf die beschriebene Weise auf dieses aufgebracht wurde - mit der dieser Einheit gegenüberliegenden Seite an die eingangs genannte Bipolarplatte angeschweißt (oder sonstwie geeignet formschlüssig bzw. stoffschlüssig verbunden) werden, was den Vorteil aufweist, dass dann keine eigenständige Dichtung zwischen dem Rand des Gestricks und der Bipolarplatte benötigt wird. Insbesondere gilt dies, wenn diese Verbindung beispielsweise gleichzeitig mit der Herstellen der Elektrolytschicht der CEA-Einheit mit dem Elektrolytmaterial zusätzlich versiegelt wird.

Ebenfalls in diesem Zusammenhang sei erwähnt, dass das Gestrick bzw. die Tragstruktur in seiner/ihrer Gesamtheit durch ein eine Stromleitung sicherstellendes Verfahren, wie Kaltverschweißen, Schweißen, Löten oder Sintern mit der Bipolarplatte verbunden werden kann. Derartige Verfahren sind für eine Serienfertigung ausgereift und optimal anwendbar. Die besagte Stromleitung stellt dabei sicher, dass elektrischer Strom wie gewünscht nicht nur erzeugt, sondern auch von Einzel-Zelle zu Einzel-Zelle weitergeleitet werden kann.

Im Rahmen des Herstellprozesses einer erfindungsgemäßen Brennstoffzelle kann die elektrodennahe Gestricklage (oder dgl.) vor dem Auftragen der Elektrodenschicht mit einer porösen Deckschicht, bspw. aus metallischem, keramischen oder metallisch-keramischen Material versintert werden, was die Stabilität des Gestricks in diesem Bereich erhöht. In vergleichbarer Weise kann insbesondere auf die Anodenseite des Gestricks vor dem Auftragen der Elektrodenschicht eine poröse Folie, insbesondere aus einem elektrisch leitfähigen Material, aufgebracht werden, wobei diese Porosität der Folie auch erst nach deren Aufbringen insbesondere auf mechanischem oder elektrochemischen oder thermischen Wege (indem in die Folie ein sog. Porenbildner eingebracht ist) erzeugt werden kann. Dabei sind (selbstverständlich) die genannten Poren erforderlich, um ein gewünschte Passage der Reaktanden zwischen dem Gestrick (bzw. allgemein der Tragstruktur ) und der anliegenden Elektrodenschicht zu ermöglichen.

Wie oben bereits erwähnt, kann sich neben der Querschnittsveränderung des Drahtes auch die Materialzusammensetzung der Tragstruktur lokal ändern. Damit lässt sich auch die interne Gasreformierung auf der Anodenseite steuern, die endotherm abläuft und insbesondere von Nickel bewerkstelligt wird, d.h. Nickel wirkt als Katalysator. Ein verminderter Nickel-Oberflächenanteil im sog. Brenngaseinlauf der Brennstoffzelle verändert den Reformierungsvorgang und damit die Reaktionsfreudigkeit des Brenngases in der Brennstoff-Zelle und bewirkt damit quasi eine Abkühlung, die lokal eine Leistungsreduktion der Zelle verursacht. Der Aufbau und die Materialzusammensetzung der Tragstruktur sind daher generell Parameter, mit denen eine Vergleichmäßigung des Reformiervorganges, der Stoffumsetzung und der Leistungsfreisetzung der Brennstoff-Einzel-Zelle erreicht werden können.

Der Aufbau der oben beschriebenen Einzel-Zelle ermöglicht einen besonders effizienten Herstellungsprozess. Dieser Herstellungsprozess kann kontinuierlich ablaufen. So kann aus einem einzelnen Draht zunächst ein Gestrickband bzw. Tragstruktur-Band kontinuierlich hergestellt werden, in dem die gewünschten sog. Gradierungen zur Ausbildung örtlicher unterschiedlicher Strömungswiderstände (wie weiter oben ausführlich erläutert wurde), sowie die Verschweißungen bzw. allgemein Verbindungen zwischen den einzelnen Draht-Kreuzungspunkten realisiert werden. Das solchermaßen gebildete Gestrickband (oder dgl.) kann dann kontinuierlich weiter bearbeitet werden, wobei kontinuierlich nacheinander die genannten Anodenschichten, Elektrolytschichten und Kathodenschichten aufgebracht werden können. Schließlich sind die Brennstoff-Einzel-Zellen aus diesem so gebildeten sog. Brennstoffzellen-Band durch Schneiden konfektionierbar.

Ein Ausführungsbeispiel einer erfindungsgemäßen Brennstoff-Einzel-Zelle sowie des erfindungsgemäßen Verfahrens wird nachfolgend und mit Bezug auf die beiliegenden Zeichnungen beschrieben. Dabei zeigt
- Fig. 1: eine schematische Teilschnittansicht durch eine auf einer Bipolarplatte angeordnete Brennstoff-Einzel-Zelle (als Schnitt A-A aus Fig.2),
- Fig. 2: eine Draufsicht auf das Gestrick dieser Einzel-Zelle mit eingeprägten divergierenden Strömungskanälen (gemäß Schnitt B-B aus Fig.1),
- Fig. 3: eine schematische Darstellung eines erfindungsgemäßen Herstellverfahrens.

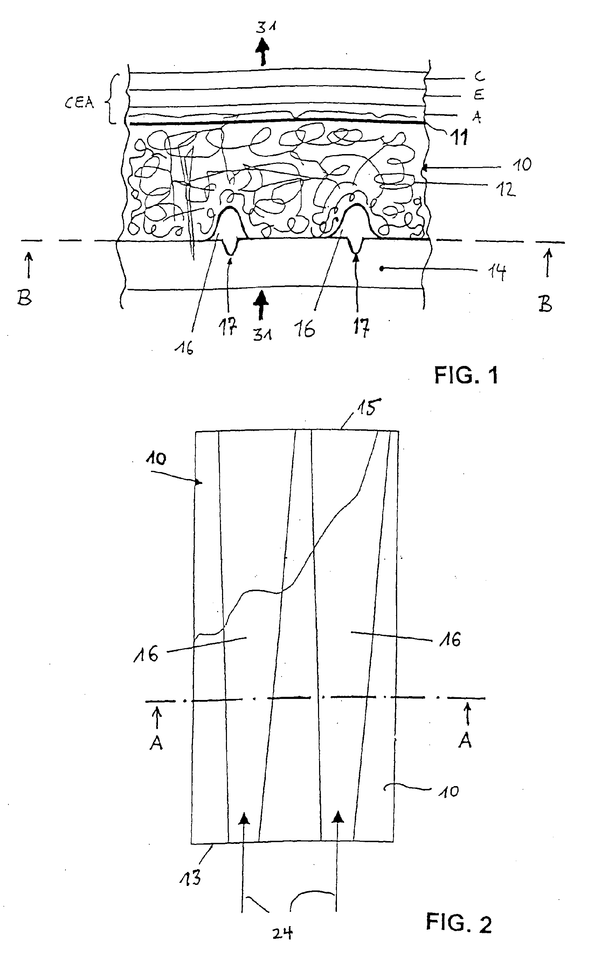

In Fig.1 ist der Aufbau einer erfindungsgemäßen Brennstoff-Einzel-Zelle in einer Teilschnitt-Ansicht dargestellt, wobei sich aus mehreren solchen Brennstoff-Einzel-Zellen ein sog. Stack einer gesamten Brennstoffzelleneinheit zusammensetzt. Die dargestellte Einzel-Zelle umfasst ein Gestrick 10 aus metallischem Draht 12, welches als Tragstruktur für die darauf angeordnete Kathoden-Elektrolyt-Anoden-Einheit CEA dient, wobei mit dem Buchstaben C die Kathode (= cathode), mit dem Buchstaben E der Electrolyt und mit dem Buchstaben A die Anode bezeichnet ist. Auf der der CEA-Einheit gegenüberliegenden Seite des Gestricks 10 befindet sich eine in der Gestaltung von Brennstoff-Zellen bzw. Brennstoff-Einzel-Zellen übliche Bipolarplatte 14.

Wenn es sich bei der vorliegenden Brennstoff-Einzel-Zelle um eine solche einer sog. SOFC (Solid Oxid Fuel Cell) und damit um eine Hochtemperatur-Brennstoffzelle handelt, so kann als Elektrolyt bspw. der keramische Festkörper ZrO₂ mit (Y₂O₃) Stabilisierung verwendet werden. Dieser Elektrolyt ist für SauerstoffIonen leitend. Für die Anodenschicht ist vorliegend bspw. Ni-YSZ verwendet. Für die Kathodenschicht kann ein persoskitisches Oxid, z.B. LSM, eingesetzt sein. Dabei wird auf die elektrochemischen Vorgänge bei der Stromerzeugung nicht näher eingegangen, da dies dem Fachmann bekannt ist. Wie bekannt kann aufgrund dieser Vorgänge in der Brennstoff-Einzel-Zelle ein elektrischer Stromfluss gemäß Pfeilen 31 bzw. ein entsprechendes elektrisches Spannungspotential erzeugt werden, wenn mit der Anodenseite (A) des CEA ein geeignetes Brenngas und mit der Kathodenseite (C) der CEA-Einheit Luftsauerstoff in Kontakt gebracht wird. Dabei wird zumindest das Brenngas durch das Gestrick 10 hindurch geleitet, und zwar in der Darstellung nach **Fig.1** senkrecht zur Zeichenebene. Das Brenngas wird somit zwischen der CEA-Einheit und der Bipolarplatte 14 geführt. In **Fig.2** strömt das Brenngas gemäß den Pfeilen 24 in das Gestrick 10 hinein, wobei sich an der (Unter)-Kante 13 somit der sog. Brenngas-Einlauf befindet.

Der Draht 12, aus dem das Gestrick 10 gebildet ist, besteht aus einer Nickellegierung, so dass eine Korrosionsbeständigkeit gegenüber den eingeleiteten Reaktanden (aus dem Brenngas sowie aus und auch gegenüber der Luft) gegeben ist. Wie weiter oben ausführlich erläutert wurde, ist das Gestrick 10 hinsichtlich seiner Dicke oder Dichte sowohl in Pfeil-Richtung 31 zur CEA-Schicht hin, d.h. in Fortbewegungsgrichtung der Reaktanden, als auch in Haupt-Strömungsrichtung des Brenngases (in Fig.1 senkrecht zur Zeichenebene, in Fig.2 gemäß Pfeilrichtung 24) bzgl. des Strömungsquerschnittes "gradiert", derart, dass ein örtlich unterschiedlicher Strömungswiderstand vorliegt. Innerhalb des Gestricks 10 ist zur Erreichung dieser sog. Gradierung die Maschendichte des Gestricks 10 örtlich unterschiedlich (was aus der Figurendarstellung so nicht ersichtlich ist). Wie ebenfalls bereits erläutert wurde, sind die einzelnen Drähte 12 des Gestricks 10 durch einen Verschweißvorgang oder dgl. miteinander verbunden, so dass ein möglichst geringer elektrischer Widerstand zur Führung des elektrischen Stromes (gemäß Pfeilen 31) erreicht ist.

An der der CEA-Einheit gegenüberliegenden (Unter)-Seite des Gestrickes 10 sind Kanäle 16 ausgebildet, die in Strömungsrichtung 24 des Brenngases verlaufen und dieses somit verbessert über der gesamten Fläche bzw. dem gesamten Volumen des Gestricks 10 verteilen. Damit korrespondierende Kanäle 17 können (wie üblich) in der dem Gestrick 10 zugewandten Oberfläche der Bipolarplatte 14 vorgesehen sein. Zumindest die im Gestrick 10 bspw. durch Einpressen ausgeformten Kanäle 16 verlaufen - wie **Fig.2** zeigt - divergierend, d.h. sich in Strömungsrichtung 24 querschnittsmäßig aufweitend, so dass in der Nähe des Brenngas-Eintritts (Kante 13) eine höhere Strömungsgeschwindigkeit vorliegt als im gegenüberliegenden Austrittsbereich 15 der Brennstoff-Einzel-Zelle. Dies führt über der Länge der Einzel-Zelle in Strömungsrichtung 24 betrachtet zu einer Homogenisierung der Stoffumsätze und der Energiefreisetzung. Mit dieser Aufweitung wird nämlich die Geschwindigkeit der Brenngasströmung über der Länge der Einzel-Zelle verringert und damit einhergehend der statische Druck der Reaktanden über den Strömungsweg durch die Anode vergleichmäßigt. Daraus resultiert eine Vergleichmäßigung der Leistungsdichte über der gesamten Brennstoff-Einzel-Zelle.

In Fig.1 ist die aus dem Gestrick 10 und der CEA-Einheit bestehende Brennstoff-Einzel-Zelle auf einer Bipolarplatte 14 angeordnet, wie bereits erläutert wurde. Durch Aneinanderreihung mehrerer solcher Bipolarplatten/Gestrick-CEA-Zellen kann ein beliebiger Stack von Einzel-Zellen aufgebaut werden, der dann insgesamt den Kernbereich einer Brennstoffzelle bildet. Natürlich muss - in bekannter Weise - noch dafür gesorgt werden, dass zwischen einer an die Kathodenseite bzw. Kathodenschicht der CEA-Einheit angrenzenden Bipolarplatte einer in **Fig.1** oberhalb der dargestellten Einzel-Zelle weiteren Einzel-Zelle und der dargestellten Kathodenschicht C der figürlich dargestellten Einzel-Zelle ebenfalls ein Strömungskanal gebildet ist. Auch dies kann beispielsweise durch eine Gestrick-Einlage realisiert sein. Überdies ist eine gasdichte Abdichtung zwischen den einzelnen Einzel-Zellen zu gewährleisten und eine Zuführung des elektrischen Stromes - beispielsweise über eine kathodenseitige Gestrick-Einlage oder eine Leitpaste - sicherzustellen. Auf diese Merkmale wird jedoch vorliegend nicht näher eingegangen, da sie aus dem Stand der Technik hinreichend bekannt sind.

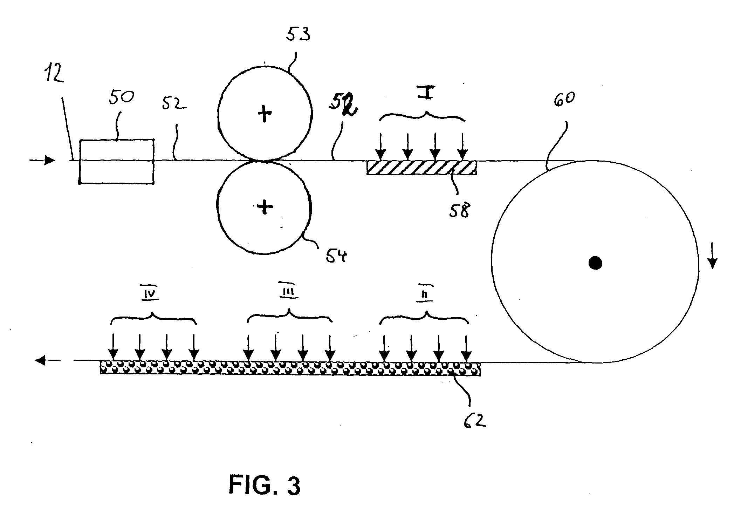

Um die soweit beschriebene Einzelzelle herzustellen, kann ein Verfahren angewandt werden, wie es nachfolgend anhand der **Fig.3** beschrieben wird. Demzufolge wird ein einzelner kontinuierlicher Draht 12 (alternativ auch mehrere Drähte gleichzeitig) in eine Strickvorrichtung 50 eingebracht und dort entsprechend der Vorgaben zu einem Gestrickband 52 verstrickt, welches die Strickvorrichtung 50 kontinuierlich verlässt. Je nach Verstrickung kann eine oben beschriebene sog. Gradierung in das Gestrick eingebracht werden, d.h. es wird eine örtlich unterschiedliche Gestrick-Dichte oder dgl. erzeugt, um örtlich unterschiedliche Strömungswiderstände zu erhalten. Überdies werden durch die Drahtbeschaffenheit die Eigenschaften des Gestricks, insbesondere in chemischer Hinsicht, bestimmt.

Das kontinuierliche Gestrickband 52 wird als nächstes einer Rolleneinheit, bestehend aus einer oberen Rolle 53 und einer unteren Rolle 54, zugeführt, in der es gewalzt wird. Die Rollen 53 und 54 besitzen jedoch eine Mehrfachfunktion. So weist die obere Rolle 53 Prägestempel auf, die quer zur Durchlaufrichtung des Gestrickbandes 52 ausgerichtet sind und abwechselnd divergierende Strömungskanäle (wie in Fig.2 unter der Bezugsziffer 16 gezeigt) in das Gestrick 10 bzw. Gestrickband 52 einprägen. Die beiden elektrisch leitenden Rollen 53 und 54 werden überdies mit Strom beaufschlagt, so dass es beim Durchlaufen des Gestrickbandes 52 zu einer Verschweißung der im Gestrick 10 aneinanderliegenden Drähte 12 kommt. Dadurch wird - wie oben bereits erwähnt ― ein besonders niedriger ohmscher Widerstand innerhalb des Gestrickes 10 erreicht, was sich positiv für die Abführung der Elektronen aus der Brennstoff-Einzel-Zelle auswirkt.

Das so behandelte Gestrickband 52 wird sodann über einen dichten Untergrund 58 geführt und von der entgegengesetzten Seite her in einem Beschichtungsprozess I mittels eines Plasmaspritzverfahrens mit einem Verdichtungs-Material bzw. Anoden-Material durchstrahlt. Dieses Anoden-Material setzt sich im Bereich des dichten Untergrundes 58 an der dortigen Oberfläche des Gestricks 10 bzw. Gestrickbandes 52 in Form einer sog. Deposition fest und bildet so eine sog. Deckschicht 11 (bzw. erste Oberflächenschicht) des Gestricks 10 (bzw.52) (und zwar auf dessen "Unterseite"), die vorteilhafterweise gleichzeitig anodenmäßig genutzt werden kann. Um eine Verbindung des Anodenmaterials mit dem festen Untergrund 58 zu vermeiden, kann dieser im übrigen mit einem Trennmittel versehen sein.

Selbstverständlich erfolgt auch der Beschichtungsprozess I kontinuierlich. Als Verdichtungs-Material kann dabei Nickel oder ein Nickellegierungs-ZrO₂-Gemisch verwendet werden. Nach einem Umlenken bzw. Umdrehen des anodenseitig bereits mit der dünnen Deckchicht 11 versehenen Gestrickbandes 52 bspw. an einer Umlenkrolle 60 erfolgt in einem weiteren Beschichtungsprozess II ein nochmaliges Aufbringen einer sehr dünnen Anodenschicht, die sich mit der vorher im Beschichtungsprozess I aufgebrachten und auch als Anodenschicht fungierenden Deckschicht 11 verbindet und die Gesamtanode (vgl. **Fig.1**, Buchstabe A) bildet. Das Umdrehen des Gestrickbandes 52 für den Beschichtungsprozess II ist dabei erforderlich, um das Material abermals von oben her auftragen zu können, nachdem - wie erläutert wurde - im Beschichtungsprozess I das Material durch das Gestrickband 52 hindurch in dessen dortige Unter-Seite eingebracht wurde.

Dabei kann im Beschichtungsprozess II eine besonders glatte Anodenoberfläche erreicht werden, indem das Gestrickband 52 über eine (in einer zur Zeichenebene senkrechten Ebene) konvexe Abstützfläche 62 geführt bzw. gespannt wird, wie dies ebenfalls bereits weiter oben erläutert wurde. Insgesamt kann mit der Vorgehensweise aus den Verfahrensschritten I und II eine sehr dünne und vorteilhafterweise glatte Anodenoberfläche erzielt werden. Nachfolgend wird in einem Beschichtungsprozess III ebenfalls mittels eines Plasmaspritzverfahrens der Elektrolyt (E, vgl. **Fig.1**) der CEA-Einheit aufgetragen und in einem Beschichtungsprozess IV das Kathodenmaterial (C). Bei der Anwendung des Plasmaspritzens wird in diesem Fall eine Gleichspannungsanregung verwendet, wobei das jeweilige Schichtmaterial in Form eines Pulvers zur Verfügung gestellt wird. Alle Beschichtungsprozesse I, II, III und IV laufen dabei kontinuierlich bei einem ständig fortlaufenden Gestrickband 52 ab. Zwischen den einzelnen Herstellungsschritten können noch Reinigungsschritte vorgesehen sein. Überdies erfolgen die jeweiligen thermischen Spritzprozesse in getrennten Kammern mit Schleusen und vorzugsweise unter Schutzgasatmosphäre, so dass Oxidationsvorgänge und wechselseitige Verunreinigungen weitestgehend vermieden werden können.

Am Ende des Herstellungsverfahrens können einzelne Einzel-Zellen-Strukturen durch Konfektionierung des beschichteten Gestrickbandes 52, beispielsweise durch Schneiden (bspw. mit Laser oder Wasserstrahl) gewonnen werden. Diese Einzel-Zellen können dann zu einem Brennstoffzellen-Stack weiterverarbeitet werden. Dabei sind Verfahrensschritte wie Fixieren, Abdichten, Kontaktieren etc. durchzuführen. Insgesamt stellt das erfindungsgemäße Verfahren eine einfache und extrem kostengünstige Herstellungsmöglichkeit für Brennstoffzellen-Einzelzellen dar, die ihrerseits durch die erfindungsgemäße Ausbildung besonders günstige Eigenschaften in Bezug auf thermomechanische Spannungen aufweisen und insbesondere auch für den nicht-stationären Einsatz geeignet sind.

Selbstverständlich kann man alternativ zu dem oben beschriebenen kontinuierlichen Herstellverfahren auch auf andere (bekannte) Herstellverfahren zurückgreifen. So ist es möglich, zuerst Gestrickbänder zu stricken und diese dann zu konfektionieren (bspw. Wickeln und Legen der Bänder). Nach dem Verpressen der konfektionierten Teile zu Plattenbauteilen in sogenannten Pressformen kann dann eine sog. Spritzsperre und/oder Trägerschicht für die CEA-Einheit aufgebracht werden. Danach können in weiteren Schritten die Beschichtungen für die Elektroden und den Elektrolyten erfolgen. Grundsätzlich sind dabei die genanten Verfahrensschritte in vergleichbarer Weise auch auf andere aus Metalldraht bzw. Drähten aufgebauten Tragstrukturen anwendbar, so bspw. auf Gewirke, Geflechte oder Gewebe, wobei ferner noch darauf hingewiesen sei, dass durchaus eine Vielzahl von Details auch abweichend von obigen Ausführungen gestaltet sein kann, ohne den Inhalt der Patentansprüche zu verlassen. Insbesondere ist die geschützte Brennstoffzelle als Bauteil auch nicht auf eine aus einem Gestrick gebildete poröse Tragstruktur 10 beschränkt; vielmehr können hierfür auch aus Metalldrähten 12 aufgebaute Gewebe, Geflechte oder Gewirke zum Einsatz kommen.

## Patentansprüche

1. Brennstoffzelle, umfassend einen Stack aus zumindest einer Einzel-Zelle mit einer Anoden-Elektrolyt-Kathodeneinheit (CEA), zumindest einer Bipolarplatte (14) und einer aus Metalldraht aufgebauten porösen Tragstruktur, insbesondere in Form eines Gestricks (10) oder Gewirks oder Geflechts oder Gewebes, für die Anoden-Elektrolyt-Kathodeneinheit (CEA), wobei die von einem Fluid durchströmte poröse Tragstruktur (10) unterschiedlich strukturiert ist,
**dadurch gekennzeichnet, dass** die Tragstruktur einen sich verändernden Strömungswiderstand besitzt, der durch eine Veränderung der Drahtstärke des die Tragstruktur (10) bildenden Drahtes (12) und/oder durch eine bei der Herstellung der Tragstruktur (10) unterschiedlich gewählte Maschendichte und/oder Materialdichte und/oder durch eine Änderung der Maschenform und/oder der Oberflächenbeschaffenheit der Schlingen in der Tragstruktur (10) erreicht ist.

2. Brennstoffzelle, umfassend einen Stack aus zumindest einer Einzel-Zelle mit einer Anoden-Elektrolyt-Kathodeneinheit (CEA), zumindest einer Bipolarplatte (14) und einer aus Metalldraht aufgebauten porösen Tragstruktur, insbesondere in Form eines Gestricks (10) oder Gewirks oder Geflechts oder Gewebes, für die Anoden-Elektrolyt-Kathodeneinheit (CEA), wobei die von einem Fluid durchströmte poröse Tragstruktur (10) unterschiedlich strukturiert ist,
**dadurch gekennzeichnet, dass** die Tragstruktur einen sich verändernden Strömungswiderstand besitzt, der durch eine Änderung, insbesondere eine Aufweitung des Strömungsquerschnittes erreicht ist.

3. Brennstoffzelle nach Anspruch 2,
**dadurch gekennzeichnet, dass** der sich verändernde Strömungswiderstand durch divergierende Kanäle (16) in der Tragstruktur (10) erreicht ist.

4. Brennstoffzelle nach einem der vorhergehenden Ansprüche,
**dadurch gekennzeichnet, dass** unterschiedliche Drähte (12) (hinsichtlich Material und/oder Abmessung und/oder Oberfläche) in der Tragstruktur (10) kombiniert sind.

5. Brennstoffzelle nach einem der vorhergehenden Ansprüche,
**dadurch gekennzeichnet, dass** Randleisten oder Randstreifen in die Tragstruktur (10) eingearbeitet und/oder poröse Verstärkungsschichten oder (eine) poröse Folie(n) auf die Oberfläche der Tragstruktur (10) aufgebracht ist/sind.

6. Brennstoffzelle nach einem der vorhergehenden Ansprüche,
**dadurch gekennzeichnet, dass** die Drähte (12) der Tragstruktur (10) an deren Berührungs- und Anlagepunkten fest miteinander verbünden, insbesondere verklebt, oder verlötet oder versintert oder verschweißt sind.
